# EUROPEAN PATENT APPLICATION

(11) **EP 4 198 946 A1**
(43) Date of publication of application: **21.06.2023**
(21) Application number: 21275187.9
(22) Date of filing: 16.12.2021
(51) Int. Cl.: G08G 5/00, G01S 5/06, G01S 5/14

(54) **VEHICLE NAVIGATION ASSISTANCE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A signal from a mobile communication device (102) of an unmanned aerial vehicle (103) is received, via cellular network communication, by each of a plurality of cellular network base stations (106, 107, 108). A position of the unmanned aerial vehicle (103) is determined based on a triangulation operation performed using the signal received by the cellular network base stations (106, 107, 108). Vehicle navigational data derived from the position determination is used to determine that a navigation assistance notification should be communicated to a notification receiver (102, 114) and, in response, communication of the navigation assistance notification to the notification receiver (102, 114) is initiated.

## Description

### FIELD

The present invention relates to vehicle navigation, and more particularly to assisting navigation of aircraft.

### BACKGROUND

Air Traffic Control (ATC) regulations require an aircraft navigating within controlled airspace to carry equipment that enables its position to be determined and avoidance action to be instigated to avert collisions.

Various jurisdictions mandate the use of Automatic Dependent Surveillance - Broadcast (ADS-B). With this surveillance technology, the position of an aircraft is determined by that aircraft and broadcast along with its identity. The signal (ADS-B out) is receivable by ATC ground stations, for use in monitoring air traffic within a particular area, and receivable by other aircraft, for use in airborne traffic situational awareness and self-separation (ADS-B in). The transmission range of ADS-B is sufficient to improve the utilisation of ground stations for full, national coverage.

A type of aircraft is an unmanned aerial vehicle (UAV), also known as a drone, that may be piloted by remote control or by an autonomous guidance system. As UAVs do not have a pilot physically onboard, they must be flown either in accordance with an operating principle (within the visual line of sight (VLOS)) under which a remote pilot must be able to be clearly see the UAV at all times when it is airborne, so that the remote pilot is always able to visually detect when action may need to be taken to avoid the UAV colliding with anything, or otherwise in accordance with an operating principle (beyond the visual line of sight (BVLOS) under which an alternative method of collision avoidance must be implemented to ensure that the UAV can be flown safely when the remote pilot is not able to be clearly see it.

Regulations involving flying UAVs may be developed with reference to such aspects as vehicle propulsion/control type, power, weight, size, speed, operational/endurance characteristics and/or associated risk to life during flight, and may define different categories and/or classifications of UAV, operator/flyer permit requirements, flight authorisation requirements etc.

For example, currently, the flying of any 'drone' or model aircraft in the UK is covered by the Unmanned Aircraft Systems (UAS) Regulations, which outlines limits for 'Open' category flying, which covers operations that do not require operational authorisation from the Civil Aviation Authority, for 'Specific' category flying, which covers operations that are deemed to present a higher risk and that do require operational authorisation from the Civil Aviation Authority, and which distinguishes both of these categories from a 'Certified' category, which covers operations that are deemed to present an even greater risk, equivalent to that of manned aviation. Further, in the UK, the need for a flyer ID or operator ID is based on the class marking of the UAV, or alternatively to the flying weight and type of the UAV. The lowest weight band (maximum take-off mass (MTOM)) is up to 250g, and other bands, such as up to 500g, up to 2kg, and up to 25kg, are referenced in relation to 'Open' category flying, which specifies a maximum altitude restriction of 400ft (120m) above ground level.

In the UK, it has been known for a police force, ambulance service or rescue team to fly a UAV equipped with camera technology (for photographs, live-link or recorded video and/or thermal imaging) up to a maximum height of 120m from ground level, within a maximum range of 500m from the controller, the UAV being multi-rotor (rather than fixed-wing), a weight up to 25kg, a maximum horizontal speed of up to 65 km/h, and a fly time, using power from rechargeable batteries, of up to 45 minutes.

In uncontrolled airspace, equipment is beginning to be carried that performs a similar function as that for general aviation traffic, but a standard has yet to be defined and there is a lack of interoperability between systems from different manufacturers. In addition, currently fitted technology has a range that is less than that of ADS-B and national coverage is patchy.

Currently, there is no equivalent tracking equipment for small unmanned aerial vehicles (drones) that must fly at an altitude no higher than 400ft (120m) above ground level. Due to their relatively small size and low power, existing solutions are impractical to deploy, and an alternative technology is required.

### SUMMARY

According to an aspect there is provided a method comprising determining a position of an unmanned aerial vehicle (UAV) based on a triangulation operation performed using a signal received, via cellular network communication, from a mobile communication device of the unmanned aerial vehicle (UAV) by each of a plurality of cellular network base stations.

The determined position may indicate a geographical area (region) within which the unmanned aerial vehicle (UAV) is located or a precise geographical point (location) at which the unmanned aerial vehicle (UAV) is located.

The method may further comprise deriving vehicle navigational from the position determination, and determining, using derived vehicle navigational data, that a navigation assistance notification should be communicated to a notification receiver and, in response, communicating said navigation assistance notification to said notification receiver.

The notification receiver may be the mobile communication device. The notification received may be a remote device.

The navigation assistance notification may comprise a warning.

The cellular network may have capabilities meeting a 2G, 3G, 4G or 5G standard as defined by the International Telecommunications Union (ITU).

The unmanned aerial vehicle (UAV) may have a weight that does not exceed 25kg.

The unmanned aerial vehicle (UAV) may be a multi-rotor unmanned aerial vehicle (UAV).

According to an aspect there is provided apparatus, comprising: a mobile communication device affiliated with an unmanned aerial vehicle, the mobile communication device functional for cellular communication with a cellular network, and a positioning unit associated with the cellular network and functional to determine a position of the unmanned aerial vehicle based on a triangulation operation performed using a signal received, via cellular network communication, from the mobile communication device of the unmanned aerial vehicle by each of a plurality of cellular network base stations of the cellular network.

The positioning unit may be comprised by or associated with a surveillance unit, and the surveillance unit may be functional to derive vehicle navigational from the position determination, and to determine, using derived vehicle navigational data, that a navigation assistance notification should be communicated to a notification receiver and, in response, to communicate said navigation assistance notification to said notification receiver.

The notification receiver may be the mobile communication device. The notification received may be a remote device.

The navigation assistance notification may comprise a warning.

The cellular network may have capabilities meeting a 2G, 3G, 4G or 5G standard as defined by the International Telecommunications Union (ITU).

The mobile communications device may comprise a subscriber identification module (SIM) in the form of a universal integrated circuit card (SIM card).

The unmanned aerial vehicle (UAV) may have a weight that does not exceed 25kg.

The unmanned aerial vehicle (UAV) may be a multi-rotor unmanned aerial vehicle (UAV).

Further aspects disclosed herein may be incorporated in the appended claims.

### BRIEF DESCRIPTION OF THE FIGURES

Embodiments of the invention will now be described by way of example only with reference to the figures, in which:
**Figure 1** is a schematic of apparatus for determining a position of a vehicle;
**Figure 2** is a schematic of apparatus for providing vehicle navigation assistance;
**Figure 3** is a diagram illustrating a first relative positioning of a first vehicle and a second vehicle;
**Figure 4** is a diagram illustrating a second relative positioning of first vehicle and a second vehicle;
**Figure 5** is a diagram illustrating a third relative positioning of first vehicle and a second vehicle; and
**Figure 6** shows steps in a method of providing vehicle navigation assistance.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A signal from a mobile communication device of an unmanned aerial vehicle is received, via cellular network communication, by each of a plurality of cellular network base stations. A position of the unmanned aerial vehicle is determined based on a triangulation operation performed using the signal received by the cellular network base stations. Vehicle navigational data derived from the position determination is used to determine that a navigation assistance notification should be communicated to a notification receiver and, in response, communication of the navigation assistance notification to the notification receiver is initiated.

According to an example there is provided a method, in which there is determined a position of an unmanned aerial vehicle (UAV) based on a triangulation operation performed using a signal received, via cellular network communication, from a mobile communication device of the unmanned aerial vehicle (UAV) by each of a plurality of cellular network base stations.

According to an example there is provided a method, in which there is determined a position of an unmanned aerial vehicle (UAV) based on a triangulation operation performed using a signal received, via cellular network communication, from a mobile communication device of the unmanned aerial vehicle (UAV) by each of a plurality of cellular network base stations, and in which vehicle navigational data is derived from the position determination, there is determined, using derived vehicle navigational data, that a navigation assistance notification should be communicated to a notification receiver and, in response, there is communicated the navigation assistance notification to the notification receiver.

According to an example there is provided apparatus, comprising: a mobile communication device affiliated with an unmanned aerial vehicle, the mobile communication device functional for cellular communication with a cellular network, and a positioning unit associated with the cellular network and functional to determine a position of the unmanned aerial vehicle based on a triangulation operation performed using a signal received, via cellular network communication, from the mobile communication device of the unmanned aerial vehicle by each of a plurality of cellular network base stations of the cellular network.

In at least one such example, the positioning unit is comprised by or associated with a surveillance unit, and the surveillance unit is functional to derive vehicle navigational from the position determination, and to determine, using derived vehicle navigational data, that a navigation assistance notification should be communicated to a notification receiver and, in response, to communicate the navigation assistance notification to the notification receiver.

In at least one example in which a navigation assistance notification is communicated to a notification receiver, the notification receiver is the mobile communication device.

In at least one example in which a navigation assistance notification is communicated to a notification receiver, the notification receiver is a remote device.

In at least one example in which a navigation assistance notification is communicated to a notification receiver, the navigation assistance notification comprises a warning.

In at least one example, the cellular network has capabilities meeting a 2G, 3G, 4G or 5G standard as defined by the International Telecommunications Union (ITU).

In at least one example, the mobile communications device comprises a subscriber identification module (SIM) in the form of a universal integrated circuit card (SIM card).

In at least one example, the unmanned aerial vehicle (UAV) has a weight that does not exceed 25kg.

In at least one example, the unmanned aerial vehicle (UAV) is a multi-rotor unmanned aerial vehicle (UAV).

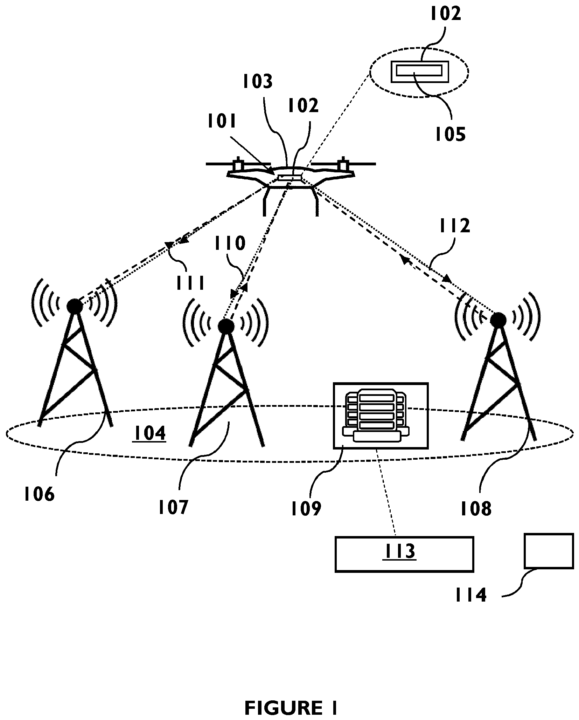

Figure 1 is a schematic representation of an apparatus according to an example.

Apparatus 101 comprises a mobile communication device 102 affiliated with a vehicle 103.

The vehicle 103 is an aerial vehicle, more particularly, an unmanned aerial vehicle (UAV). In a preferred application, the vehicle 103 is a UAV that may be flown within uncontrolled airspace at an altitude not exceeding 400ft (120m) above ground level. In an example, the unmanned aerial vehicle (UAV) has a weight that does not exceed 25kg. In other examples, the unmanned aerial vehicle (UAV) may have a weight that does not exceed 250g, 500g, 2kg, or 10kg. In the illustrated example, the UAV 103 is a multi-rotor UAV (rather than a fixed-wing UAV). The UAV 103 may have any suitable plural number of rotors.

The mobile communication device 102, shown on-board, is functional for cellular communication with a cellular network, indicated at 104.

The mobile communication device 102 is a cellular device, in this example comprising a subscriber identification module (SIM) 105 that may take the form of a universal integrated circuit card (SIM card) or an embedded universal integrated circuit card (eSIM).

The cellular network 104 comprises a plurality of cellular network base stations, in this example provided by first, second and third cell towers, 106, 107 and 108.

A position of the vehicle 103 can be determined based on cell tower triangulation of a signal from the mobile communication device 102 and received by the plurality of cellular network base stations 106, 107, 108.

A positioning unit 109 is indicated, which is associated with the cellular network 104 and functional to perform a triangulation operation using a signal emitted by the mobile communication device 102 and received by multiple cellular network base stations of the cellular network 104. The positioning unit 109 may comprise any suitable computing apparatus and/or data processing arrangement, which may be part of any suitable computer network, by means of which data derived from a signal received by the cellular network 104 from the mobile communications device 102, for use in the triangulation operation, can be received.

In this example, UAV 103 is carrying a mobile communication device 102 by means of which a position of the UAV 103 can be determined based on a triangulation operation being performed using a signal received, via cellular network communication, from the mobile communication device 102 of the UAV 103 by each of a plurality of cellular network base stations of cellular network 104.

Any suitable triangulation operation may be performed to determine the position, for example a known technique utilising comparisons of the time taken for a signal emitted by the mobile communication device to reach each of a plurality of cellular network base stations and/or the strength of the signal on reaching each of those cellular network base stations.

During normal operation, the mobile communication device 102 regularly emits a signal that can be picked up by cellular network base stations within range, in Figure 1 by cell towers 106, 107, 108.

In the illustrated scenario, vehicle 103 is physically closest to cell tower 107, and then closer to cell tower 106 than to cell tower 108; thus, it can be expected that a signal emitted by the mobile communication device 102 will reach cell tower 107, as indicated by arrow 110, in less time than it will take to reach cell tower 106, as indicated by arrow 112, and that it will take the longest time for the signal to reach cell tower 108, as indicated by arrow 113. It can also be expected for the signal strength to be greater at cell tower 107 than at cell tower 106 and at cell tower 108.

By comparing the detected time and/or strength of the signal at each of multiple cellular network base stations in range (typically the three closest), a position of the mobile communications device relative to those cellular network base stations can be determined. With knowledge of the geographical location of each cellular network base stations, a geographical position of the mobile communication device, and hence the affiliated vehicle, can be determined.

There is therefore provided a method comprising determining a position of an unmanned aerial vehicle based on a triangulation operation performed using a signal received, via cellular network communication, from a mobile communication device of the unmanned aerial vehicle by each of a plurality of cellular network base stations.

In the scenario illustrated in Figure 1, cell towers 106, 107, 108 are the three closest to the vehicle 103. Thus, a position determination based on cell tower triangulation using these three cell towers, as discussed above, enables a vehicle 103 to be identified as being within range of those three cell towers.

Such a position determination may be performed for the purpose of detecting a vehicle as being present within a region associated with a set of cell towers. This information may be used for finding a vehicle. This information may be used for monitoring traffic in that region.

Such a position determination may be used for tracking the vehicle.

The cellular network 104 may comprise further cell towers (not illustrated) distributed at locations across a wider geographical region, such that as the vehicle 103 travels from one place to another within that wider region, the cell towers in range to detect a signal emitted by the mobile communication device can change.

The triangulation operation discussed above may be repeated, to determine whether the position of the vehicle has changed, and each time the triangulation operation is performed, a different set of cell towers of the cellular network may be involved. It is to be appreciated that different sets of cell towers may include cell towers in common (for example, if one of three previously closest cell towers is one of three subsequently closest cell towers after the vehicle has travelled from one place to another).

The tracking may involve simply identifying that the vehicle has moved from being within one region associated with one plurality of cellular network base stations to another region associated with another plurality of cellular network base stations. The tracking may involve identifying that the vehicle has moved from one geographical location to another.

Factors affecting achievable accuracy of the position determination include the distance between cellular network base stations and the frequency that a signal is emitted by the mobile communication device.

It is important therefore for it to be understood that a determined position may indicate a geographical area (region) within which the vehicle is located rather than a precise geographical point (location) at which the vehicle is located.

Several advantages of the method and associated apparatus described herein are identifiable. Utilising existing cellular network technology for determining the position of a UAV reduces cost and complexity of implementation. Componentry for enabling communication of a UAV with a cellular network is relatively small and lightweight and hence minimises additional physical load for the aerial vehicle to carry. This is beneficial in view of significant proportions of the overall weight of the vehicle being contributed by the power supply arrangement and payload.

The cellular network may have capabilities meeting a 2G, 3G, 4G or 5G standard as defined by the International Telecommunications Union (ITU). In some applications, 2G or 3G capability may be sufficient and may offer cost and/or power management benefits.

The positioning unit 109 may be comprised by or associated with a surveillance unit 113 that is functional to derive vehicle navigational data comprising position, course and speed components from the position determination as described above.

The surveillance unit 113 may be functional to perform one or more navigation assistance operations based on a position determination as described above, or on vehicle navigational data derived therefrom. In an example, the surveillance unit 113 is functional to perform a navigation assistance operation to determine whether a navigation assistance notification should be communicated to a notification receiver, which may be the mobile communication device 102 of the vehicle, with the navigation assistance notification being communicated via the cellular network 104, or a remote device, indicated at 114, with the navigation assistance notification being communicated by any suitable wired orwireless communication arrangement. The remote device 114 may be any suitable device, such as a mobile communications device or a computer of a monitoring system.

The navigation assistance notification may comprise information, a warning and/or an instruction.

For example, the surveillance unit 113 may be functional to determine that the UAV 103 is no longer in, or may imminently leave, a predetermined zone, and, in response, to issue a navigation assistance notification to advise of the actual or potential event of the vehicle exceeding a boundary. By way of further example, the surveillance unit 113 may be functional to determine that the UAV 103 is within a predetermined range of a structure, for example a cell tower, that represents a collision risk involving the UAV 103 and that structure and, in response, to issue a navigation assistance notification informing of a potential collision event.

The navigation assistance notification may be for one or more purposes, for example, to inform a remote pilot that corrective or preventative action may need to be taken and/or to initiate recordal of an actual or potential breach of flying rules in a monitoring system.

The surveillance unit 113 may comprise any suitable computing apparatus, which may be part of any suitable computer network.

There is therefore provided a method comprising determining a position of an unmanned aerial vehicle based on a triangulation operation performed using a signal received, via cellular network communication, from a mobile communication device of the unmanned aerial vehicle by each of a plurality of cellular network base stations, deriving vehicle navigational from the position determination, and determining, using derived vehicle navigational data, that a navigation assistance notification should be communicated to a notification receiver and, in response, communicating said navigation assistance notification to said notification receiver.

The description above focusses on determining the position of a vehicle, in particular a UAV, from cellular network communication between a mobile communication device of the UAV and a cellular network.

Further features achievable from the vehicle being provided with cellular network communication capability will now be described.

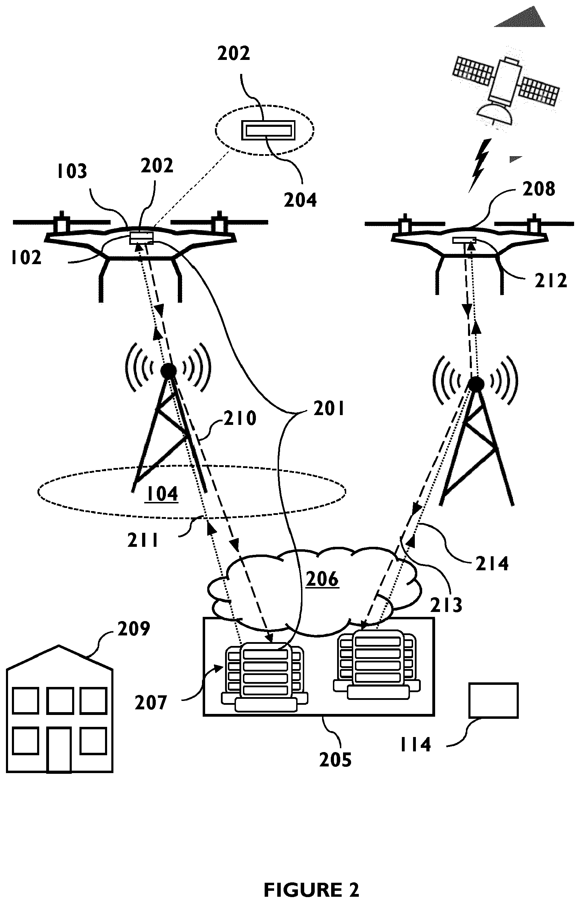

Figure 2 is a schematic representation of an apparatus according to an example, the apparatus being usable to provide vehicle navigation assistance.

Apparatus 201 comprises a mobile communication device affiliated with vehicle 103.

The mobile communication device 102 is functional for cellular communication with a cellular network, indicated at 104.

The cellular network 104 comprises a plurality of cellular network base stations of a cellular network, as indicated with reference to Figure 1, with cell tower 203 being indicated in this Figure.

The mobile communication device 102 may be any suitable cellular device utilising a subscriber identification module (SIM), which may take the form of a universal integrated circuit card (SIM card) or an embedded universal integrated circuit card (eSIM), as indicated with reference to Figure 1.

The cellular network 104 may have capabilities meeting a 2G, 3G, 4G or 5G standard as defined by the International Telecommunications Union (ITU). In an example, the cellular network 104 is a Global System for Mobile Communications (GSM) network.

In this example, the vehicle 103 is an aerial vehicle, more particularly, an unmanned aerial vehicle (UAV). In a preferred application, the vehicle 103 is a UAV that may be flown within uncontrolled airspace at an altitude not exceeding 400ft (120m) above ground level.

The mobile communication device 102 is associated with a navigation unit, indicated generally at 202, usable in a navigation system.

The navigation unit 202 may be usable in any suitable type or types of navigation system. The navigation system may be functional to determine an absolute position of the vehicle, for example with the location of the vehicle being identified with reference to a fixed, origin of a coordinate system, or to determine a relative position of the vehicle, for example with the location of the vehicle being identified relative to a known starting point within a coordinate system, the location of the known starting point within the coordinate system being identifiable with reference to a fixed, origin of that coordinate system.

The navigation system may or may not require data from an external source to determine vehicle position.

In a specific example, the navigation system is an inertial navigation system (INS). This type of navigation system does not require data from an external source to determine vehicle position. The navigation unit 202, shown on-board, may therefore utilise componentry, indicated at 204, that comprises one or more instruments or sensors for detecting changes in motion, which may include a gyroscope and/or an accelerometer, and from which vehicle navigational data comprising at least position, but preferably also course and speed components, can be derived.

In another example, the navigation system is a satellite-based navigation system. The navigation system 202 may therefore utilise componentry, indicated at 204, that includes a satellite navigation device for receiving a signal from the satellite-based navigation system from which vehicle navigational data, comprising at least position, but preferably also course and speed components, can be derived.

The satellite-based navigation system may be a global navigation satellite system (GNSS) system, for example the Global Positioning System (GPS) or the Galileo system, or alternatively a regional navigation satellite system.

The mobile communication device 102 is associated with a surveillance unit 205. The surveillance unit 205 is functional to perform at least one navigation assistance operation.

The mobile communication device 102 is functional to communicate, via the cellular network 104, vehicle navigational data derived from the navigation unit 202 to the surveillance unit 205.

The mobile communication device communicates vehicle navigational data for that vehicle with which it is affiliated.

The surveillance unit 205 may comprise any suitable computing apparatus, which may be part of any suitable computer network. In an example, a virtual private network (VPN) connection can be established via the internet, indicated at 206, with a surveillance unit 205 of a network of federated servers, indicated at 207, by means of which cellular data can be received from the mobile communication device 102, which in use is identified with vehicle 103.

The surveillance unit 205 is functional to determine, using vehicle navigational data communicated by the mobile communication device 102, that a navigation assistance notification should be communicated to the mobile communication device 102 and, in response, to initiate communication of the navigation assistance notification to the mobile communication device 102. The same or a different navigation assistance notification, which may comprise information, a warning and/or an instruction, may be communicated via the cellular network 104, or otherwise by any suitable wired or wireless communication arrangement, to a notification receiver in the form of a remote device, such as remote device 114.

The navigation assistance notification may comprise a warning. In an example, the navigation assistance notification comprises a warning of a potential collision. In an example, the navigation assistance notification comprises an instruction to take preventive action to avoid a potential collision. A potential collision to which such a warning or instruction relates may be between the vehicle and another vehicle, such as between vehicle 103 and vehicle 208 of Figure 2, or between the vehicle and a structure, such as between vehicle 103 and building 209 of Figure 2. The other vehicle or structure may be stationary or in motion when a potential collision event is identified or anticipated to transpire. The other vehicle may be the same or a different type of vehicle.

In an example, the determination that a navigation assistance notification should be communicated is based on identifying a conflict with a traffic separation rule. For example, a traffic separation rule may define a minimum distance that should be maintained between vehicles regardless of, or taking into account, the speed at which each vehicle is travelling.

The conflict may be identified as a current or future event. A type of navigation assistance notification may be selected based upon a time factor associated with the identified conflict. For example, a warning that preventative action may need to be taken to avoid a collision may be selected if a conflict is identified as having an associated time factor indicating a collision risk within a first amount of time and an instruction to take immediate preventative action to avoid a collision may be selected if a conflict is identified as having an associated time factor indicating a collision risk within a second, shorter amount of time.

In an example, the surveillance unit 205 is functional to communicate the navigation assistance notification to the mobile communication device 102 via cellular network communication.

In the example apparatus illustrated in Figure 2, the mobile communication device 102 of vehicle 103 and the surveillance unit 205 are enabled for two-way communication via cellular network 104; communication of vehicle navigational data from the mobile communication device 102 to the surveillance unit 206 via cellular network 104 is indicated by dotted line 210 and communication of a navigation assistance notification from the surveillance unit 205 to the mobile communication device 102 via cellular network 104 is indicated by dotted line 211.

In an example, the apparatus comprises a further mobile communication device, affiliated with another vehicle, and the surveillance unit is functional to determine, using vehicle navigational data communicated by the mobile communication device and further vehicle navigational data communicated by the further mobile communication device, that a navigation assistance notification should be communicated to at least one of the mobile communication devices and, in response, to initiate communication of said navigation assistance notification to the or each of the at least one of the mobile communication devices.

Referring to Figure 2, the apparatus 201 may therefore also comprise mobile communication device 212, which is affiliated with vehicle 208, and the surveillance unit 205 may then be functional to determine, using vehicle navigational data communicated by the mobile communication device 102 of vehicle 103 and further vehicle navigational data communicated by the mobile communication device 212 of vehicle 208, that a navigation assistance notification should be communicated to at least one of the mobile communication devices 102, 212 and, in response, to initiate communication of that navigation assistance notification to the one or both of the mobile communication devices 102, 212.

Thus, the surveillance unit 205 can receive first vehicle navigational data communicated from vehicle 103 and second vehicle navigational data communicated from vehicle 208 and, using both the first vehicle and second vehicle navigational data, determine whether a navigation assistance notification should be communicated to the mobile communication device 102 of vehicle 103, the mobile communication device 212 of vehicle 208 or both. Following a determination that a navigation assistance notification should be communicated to one or both mobile communication devices 102, 212, the surveillance unit 205 accordingly initiates the communication of the or each navigation assistance notification.

If a determination is made that a navigation assistance notification should be communicated to both mobile communication devices 102, 212, then either the same navigation assistance notification may be communicated to each, or each may receive a navigation assistance notification that differs in some way to that received by the other. By way of a simple example, in the event of a determination being made that the vehicles are too close to one another, a navigation assistance notification comprising a warning of a potential collision may be transmitted to the mobile communication device of one of the vehicles and a navigation assistance notification comprising an instruction to take preventive action to avoid a potential collision may be issued to the mobile communication device of the other of the vehicles.

In the illustrated example of Figure 2, vehicle 212 is also an aerial vehicle. In a specific example, vehicles 103 and 212 are unmanned aerial vehicles (UAVs).

In the illustrated example of Figure 2, the mobile communication device 212 of vehicle 208 and the surveillance unit 205 are enabled for two-way communication via the cellular network 104. In other words, cellular network communication between the mobile communication device 212 of vehicle 208 and the surveillance unit 205 can be effected via the same cellular network 104 as between the mobile communication device 102 and the surveillance unit 205.

Thus, the mobile communication device 212 of vehicle 208 can report its position to the surveillance unit 205 via cellular network 104, as indicated by dotted line 213, and the surveillance unit 205 can issue warnings and route change instructions to the mobile communication device 212 of vehicle 208 via cellular network 104, as indicated by dotted line 214.

Using the apparatus 201 described with reference to Figure 2, a collision avoidance system can be provided for drones (UAVs) that utilises existing satellite-based navigation system and cellular network technology to allow the drones to report their position to a surveillance management system (surveillance unit) that can track vehicles within a particular area and advise them of any potential conflict so that avoiding action can be taken. The drones (UAVs) may be flown within uncontrolled airspace at an altitude not exceeding 400ft (120m) above ground level.

Importantly, the disclosed arrangement allows for minimisation of the physical load required to be carried by a drone for operational integration with the collision avoidance system. This serves to reduce any barriers to application that may otherwise be presented by associated equipment being too large and/or heavy for aerial vehicles of this type. Further, implementation costs can be reduced by making use of available, tried-and-tested componentry and software. It is to be appreciated that any suitable known collision avoidance system protocol/rules may be employed and/or any desired function of a known air traffic control (ATC) or traffic management system emulated.

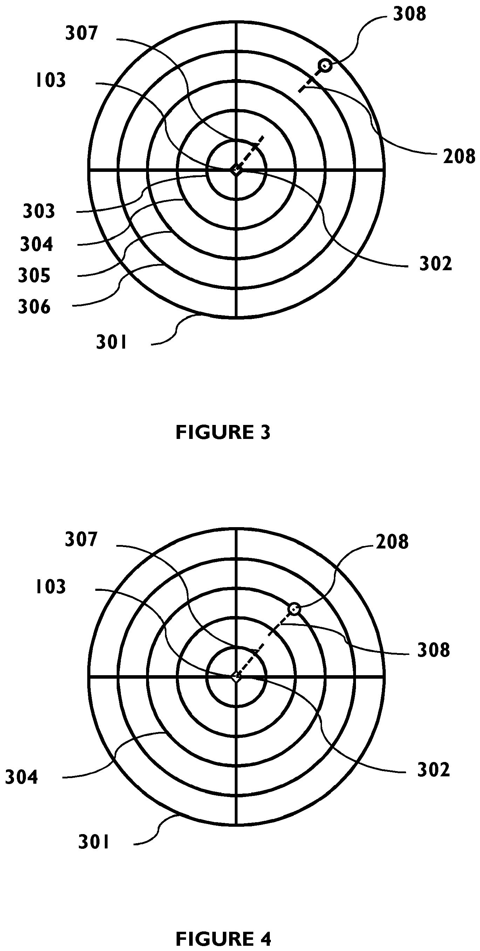

Figures 3, 4 & 5 show a first, a second and a third relative positioning of a first vehicle and a second vehicle.

Referring now to Figure 3, a first relative positioning of vehicles 103 and 208 of apparatus 201 of Figure 2, within an area 301, is shown.

Area 301 is circular, having a centre 302, about which are shown concentric rings, numbered successively 303, 304, 305 and 306 from the centre 302, that indicate different radial distances from the centre 302. Vehicle 103 is shown located at the centre 302 of area 301 and heading in a direction indicated by dotted line 307. Vehicle 208 is shown located at a distance from the centre 302 of the area 301 that is radially beyond concentric ring 306 and heading in the direction indicated by dotted line 308, pointing generally towards the centre 302 of the area 301.

The relative positioning of the vehicles 103, 208 indicates that the two vehicles 103, 208 are on course to approach one another.

In this situation, the surveillance unit 205 of the apparatus 201 can issue a navigation assistance notification to each of the vehicles 103 and 208 to advise them of approaching traffic.

Referring now to Figure 3, a second relative positioning of the vehicles 103 and 208 of apparatus 201 of Figure 2, within area 301, is shown.

In this example, the second relative positioning illustrated in Figure 4 has occurred after a period from the first relative positioning illustrated in Figure 3 during which the vehicles 103, 208 have travelled in the respective directions 307, 308.

Vehicle 103 is again shown located at the centre 302 of area 301 and heading in the direction indicated by dotted line 307. Vehicle 208 is now located at a distance from the centre 302 of the area 301 that is on concentric ring 304 and is still heading in the direction indicated by dotted line 308. Thus, the vehicle 208 has moved closer to vehicle 103 and remains pointing generally towards it.

In this situation, the surveillance unit 205 of the apparatus 201 can issue a navigation assistance notification to the vehicle 208 to instruct it to correct its course to avoid a collision with vehicle 103.

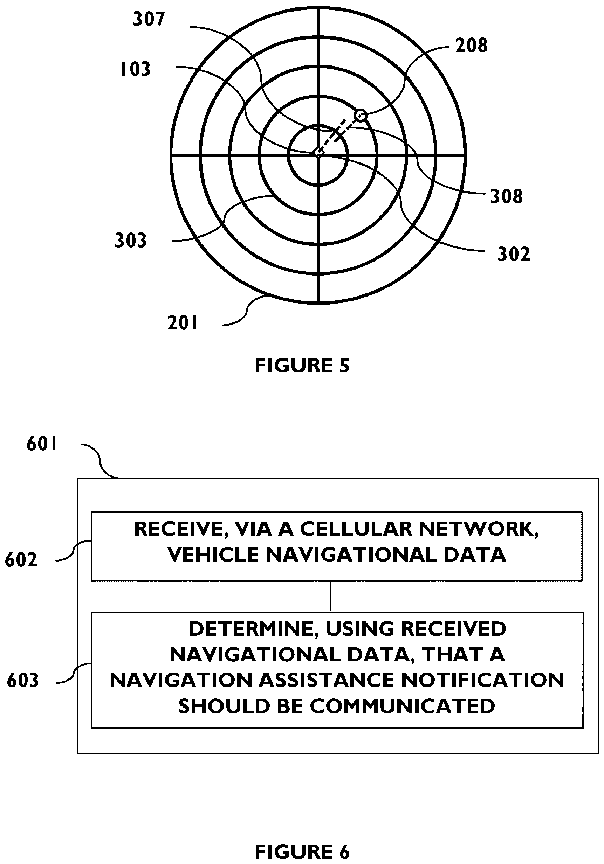

Referring now to Figure 5, a third relative positioning of the vehicles 103 and 208 of apparatus 201 of Figure 2, within area 301, is shown.

In this example, the third relative positioning illustrated in Figure 5 has occurred after a period from the second relative positioning illustrated in Figure 4 during which the vehicles 103, 208 have travelled in the respective directions 307, 308.

An optional feature of the apparatus 201 of Figure 2 will also be described with reference to this Figure.

Vehicle 103 is yet again shown located at the centre 302 of area 301 and heading in the direction indicated by dotted line 307. Vehicle 208 is now located at a lesser distance from the centre 302 of the area 301, on concentric ring 303, and is still heading in the direction indicated by dotted line 308. Thus, the vehicle 208 has moved even closer to vehicle 103. In this example, the separation distance associated with the shown relative positioning between the vehicles 103 and 208 indicates a high risk of a collision between them.

In a specific example, the mobile communication devices 102, 212 of the vehicles 103, 208 are enabled for vehicle to vehicle (V2V) communication using 5G technology, which in the scenario illustrated in Figure 5, allows a need for emergency corrective action to be taken to be identified and initiated without connectivity to the wider cellular network. V2V communication between the vehicles 103, 208 offers collision avoidance functionality that is supplementary to that provided by communication between the vehicles 103, 208 and the surveillance unit 104.

Any suitable communication standard may be used for direct communication between the vehicles 103, 208. For example, a standard meeting the specification of wireless LAN based V2V (IEEE 802.11p) first published by the IEEE in 2010 supports not only direct communication between vehicles (V2V) but also direct communication between vehicles and infrastructure (V21). Thus, the mobile communication devices 102, 212 of the vehicles 103, 208 may also be enabled for vehicle to infrastructure (V21) communication.

While a vehicle navigation assistance system involving one or two vehicles has so far been described, it is to be understood that the number of vehicles for which navigation assistance can be provided can be many more, and therefore surveillance of a greater number of vehicles within a particular area can be achieved.

A method will now be described with reference to the foregoing description and to Figure 6, the method for providing vehicle navigation assistance.

The method 601 involves, as indicated at 602, receiving, via a cellular network, vehicle navigational data, and also, as indicated at 603, determining, using received vehicle navigational data, that a navigation assistance notification should be communicated.

In an example, the method comprises receiving, via cellular network communication, vehicle navigational data from a mobile communication device of a vehicle, the vehicle navigational data being derived from a navigation system with which the mobile communication device is associated, and determining, using received vehicle navigational data, that a navigation assistance notification should be communicated to the mobile communication device and, in response, communicating that navigation assistance notification to the mobile communication device.

The example method may further comprise receiving, via cellular network communication, further vehicle navigational data from a further mobile communication device of a further vehicle, the vehicle navigational data being derived from a navigation system with which the further mobile communication device is associated, and determining, using the vehicle navigational data and said further vehicle navigational data, that a navigation assistance notification should be communicated to at least one of the mobile communication devices and, in response, communicating said navigation assistance notification to said one or both mobile communication devices.

Thus, an example method may comprise receiving, via cellular network communication, vehicle navigational data from each of a plurality of mobile communication devices, each of the plurality of mobile communication devices being affiliated with a respective one of a corresponding plurality of vehicles and being associated with a navigation system from which the vehicle navigational data is derived, and determining, using received vehicle navigational data, that a navigation assistance notification should be communicated to at least one of the plurality of mobile communication devices and, in response, communicating a navigation assistance notification to the one, or each one, of the plurality of mobile communication devices to which a navigation assistance notification was determined to be communicated.

The navigation assistance notification may be communicated via cellular network communication. Each of a plurality of mobile communication devices may communicate vehicle navigational data via the same cellular network and may also receive a navigation assistance notification via that same cellular network.

In the event of a determination that a navigation assistance notification should be communicated to more than one mobile communication device, then either the same or a different navigation assistance notification may be communicated to each. In the event of a determination that a navigation assistance notification should be communicated to more than two mobile communication devices, then either the same navigation assistance notification may be communicated to all of them, a different navigation assistance notification may be communicated to each of them, or the same navigation assistance notification may be communicated to some of them and one or more different navigation assistance notifications communicated to one or more of the others.

The determination that a navigation assistance notification should be communicated may be based on identifying a conflict with a traffic separation rule.

The navigation assistance notification may comprise a warning of a potential collision and/or an instruction to take preventive action to avoid a potential collision. The potential collision may be a potential collision between a vehicle and another vehicle or a vehicle and a structure.

In an example the vehicle or each of the vehicles is an aerial vehicle. In a specific example the vehicle or each vehicle is an unmanned aerial vehicle (UAV), such as a small unmanned aerial vehicle (drone) that is required to be flown at an altitude not exceeding 400ft (120m) above ground level.

In a specific example the navigation system is an inertial navigation system (INS).

In another example, the navigation system is a global navigation satellite system (GNSS) system.

The cellular network may have capabilities meeting a 2G, 3G, 4G or 5G standard as defined by the International Telecommunications Union (ITU).

In an example, each mobile communication device is capable of vehicle-to-vehicle (V2V) communication. Each mobile communication device may then be functional to determine, using direct communication between mobile communication devices, that preventive action should be taken by at least one of the respective vehicles to avoid a potential collision.

In an example, there is at least one mobile communication devices capable of vehicle-to-infrastructure (V21) communication.

A navigation assistance system as described herein may be used to communicate a navigation assistance notification for a purpose other than collision avoidance, for example for general traffic management. Hence, a navigation assistance notification may be communicated to direct a vehicle to change course and/or speed to facilitate smooth and/or safe traffic flow or to manage an arrival/departure time. A navigation assistance system as described herein may be used to relay information relating, for example, to environmental changes, faults, or unexpected happenings material to vehicular travel. A navigation assistance system as described herein may be used in the surveillance of vehicles of different types.

For clarity and conciseness purposes, detailed description of conventional technology that may be utilised in or by the present invention, for example, GSM cell towers or the execution of machine-readable instructions by a processor or processors to achieve any described operation or function, is omitted.

Although illustrative embodiments and examples of the invention have been disclosed in detail herein, with reference to the accompanying drawings, it is to be understood that the invention is not limited to the precise embodiment and examples shown and/or described and that various changes and modifications can be effected therein by one skilled in the art without departing from the scope of the invention as defined by the appended claims.

## Claims

1. A method comprising determining a position of an unmanned aerial vehicle (UAV) based on a triangulation operation performed using a signal received, via cellular network communication, from a mobile communication device of the unmanned aerial vehicle (UAV) by each of a plurality of cellular network base stations.

2. The method of claim 1, further comprising deriving vehicle navigational data from the position determination, and
determining, using derived vehicle navigational data, that a navigation assistance notification should be communicated to a notification receiver and, in response, communicating said navigation assistance notification to said notification receiver.

3. The method of claim 2, wherein said notification receiver is the mobile communication device or a remote device.

4. The method of claim 2 or claim 3, wherein said navigation assistance notification comprises a warning.

5. The method of any of claims 1 to 4, wherein the cellular network has capabilities meeting a 2G, 3G, 4G or 5G standard as defined by the International Telecommunications Union (ITU).

6. The method of any of claims 1 to 5, wherein the unmanned aerial vehicle (UAV) has a weight that does not exceed 25kg.

7. The method of any of claims 1 to 6, wherein the unmanned aerial vehicle (UAV) is a multi-rotor unmanned aerial vehicle (UAV).

8. Apparatus, comprising:
a mobile communication device affiliated with an unmanned aerial vehicle, the mobile communication device functional for cellular communication with a cellular network, and
a positioning unit associated with the cellular network and functional to determine a position of the unmanned aerial vehicle based on a triangulation operation performed using a signal received, via cellular network communication, from the mobile communication device of the unmanned aerial vehicle by each of a plurality of cellular network base stations of the cellular network.

9. The apparatus of claim 1, wherein the positioning unit is comprised by or associated with a surveillance unit, and
the surveillance unit is functional to derive vehicle navigational from the position determination, and to determine, using derived vehicle navigational data, that a navigation assistance notification should be communicated to a notification receiver and, in response, to communicate said navigation assistance notification to said notification receiver.

10. The apparatus of claim 8 or claim 9, wherein said notification receiver is the mobile communication device or a remote device.

11. The apparatus of claim 9 or claim 10, wherein said navigation assistance notification comprises a warning.

12. The apparatus of any of claims 8 to 11, wherein the cellular network has capabilities meeting a 2G, 3G, 4G or 5G standard as defined by the International Telecommunications Union (ITU).

13. The apparatus of claim 12, wherein the mobile communications device comprises a subscriber identification module (SIM) in the form of a universal integrated circuit card (SIM card).

14. The apparatus of any claims 8 to 13, wherein the unmanned aerial vehicle (UAV) has a weight that does not exceed 25kg.

15. The apparatus of any of claims 8 to 14, wherein the unmanned aerial vehicle (UAV) is a multi-rotor unmanned aerial vehicle (UAV).
